# EUROPÄISCHE PATENTANMELDUNG

(11) **EP 2 653 035 A1**
(43) Veröffentlichungstag der Anmeldung: **23.10.2013**
(21) Anmeldenummer: 13003508.2
(22) Anmeldetag: 06.06.2012
(51) Int. Cl.: A21C 9/06, A21C 11/10

(54) **Vorrichtung zum Herstellen von Teigwaren**

(30) Priorität: 21.06.2011 DE 102011051220
(62) Teilanmeldung aus: 12728974.2
(71) Anmelder: Repac, Cedomir, 65611 Brechen (DE)
(72) Erfinder: Repac, Cedomir, 65611 Brechen (DE)

(57) **Zusammenfassung**

Vorrichtung zum Herstellen von Teigwaren, insbesondere von gefüllten Teigtaschen, mit einem Ausstecher, der in einer Ausstechfläche eine Vielzahl von Durchbrüchen aufweist, die jeweils von einer oder mehreren Ausstechschneiden umgeben sind, wobei die Vorrichtung einen Behälter mit einer Öffnung aufweist und wobei eine Auswurfposition definiert ist, in der der Ausstecher derartvorzugsweise wieder entfernbar - anordenbar ist, dass der Ausstecher direkt oder indirekt vom Behälter getragen ist und dass mit dem Ausstecher hergestellte Teigwaren unmittelbar von dem in der Auswurfposition angeordneten Ausstecher in den Behälter überführbar sind. Die Vorrichtung ist dadurch gekennzeichnet, dass ein Haltemittel zum vorübergehenden Halten des Ausstechers in der Auswurfposition, insbesondere in oder auf der Öffnung, vorgesehen ist und der Behälter mehrere Auflagen, insbesondere als Teile eines oder mehrerer Vorsprünge, aufweist, und dass der Ausstecher derart geformt ist, dass er - insbesondere zum Überführen des Ausstechers in die Verstauposition - an den Auflagen vorbei in den Behälter -an den Auflagen vorbei in den Behälter - vorzugsweise vollständig - einführbar ist, wobei - zumindest beim Einführen des Ausstechers - ein Teil des Ausstechers in Freiräumen zwischen den Auflagen und/oder Vorsprüngen angeordnet ist, und dass das Haltemittel - insbesondere zum Bereitstellen der Auswurfposition für den Ausstecher - dazu ausgebildet ist, die Freiräume zwischen den Auflagen und/oder Vorsprüngen zu überbrücken.

## Beschreibung

Die Erfindung betrifft eine Vorrichtung zum Herstellen von Teigwaren, insbesondere von gefüllten Teigtaschen, mit einem Ausstecher, der in einer Ausstechfläche eine Vielzahl von Durchbrüchen aufweist, die jeweils von einer oder mehreren Ausstechschneiden umgeben sind.

Ausstecher der eingangs genannten Art sind beispielsweise zum Herstellen von Ravioli oder zum Herstellen von Pelmeni seit langem bekannt. Zumeist werden diese Ausstecher in der Weise verwendet, dass zunächst durch Ausrollen eine erste Teigschicht hergestellt wird, die anschließend auf den Ausstecher aufgelegt wird. Danach wird eine Vielzahl von Mulden erzeugt, indem mit den Fingern oder mit einem Löffel im Bereich der Durchbrüche der Ausstechfläche die Teigschicht etwas in die Durchbrüche hineingedrückt wird. In die hergestellten Mulden kann anschließend eine Füllung, beispielsweise eine Hackfleischfüllung, eingefüllt werden. Anschließend wird auf die mit gefüllten Mulden versehene erste Teigschicht vollflächig eine zweite Teigschicht aufgelegt und anschließend, beispielsweise mit einem Teigroller, fest gegen die erste Teigschicht und den Ausstecher gedrückt. Hierdurch werden die Ausstechschneiden, die die Durchbrüche umgeben, durch die beiden Teigschichten gedrückt und die Teigtaschen ausgeschnitten. Außerdem werden durch das Andrücken die beiden Teigschichten in den Bereichen, die die Mulden umgeben, miteinander verknetet und hierdurch verbunden. Im Ergebnis liegen auf dem Ausstecher eine Vielzahl von gefüllten Teigtaschen auf, die anschließend gekocht, gebacken oder frittiert werden können.

Aus DE 35 22 753 C2 ist ein Garnierausstecher mit einem mantelförmigen, an beiden Stirnenden offenen Ausstecher-Förmchen, dem ein mit einem Kopf versehener und von Hand betätigbarer Auswerfer zugeordnet ist bekannt. An dem Auswerfer greift eine Rückstellfeder an. Die Grundstellung des Auswerfers und die maximale Auswurfstellung ist durch Anschläge begrenzt. Es ist vorgesehen, dass mindestens ein Förmchen an der Umfangsfläche eines Gehäuses angeordnet ist und dass in dem Gehäuse der Auswerfer gelagert ist, dessen Kopf von hinten her in das Förmchen einführbar ist. Damit, Teigwaren in einen Behälter zu überführen, beschäftigt sich diese Druckschrift nicht.

Es ist die Aufgabe der vorliegenden Erfindung, eine Vorrichtung zum Herstellen von Teigwaren, insbesondere von gefüllten Teigtaschen, anzugeben, die leichter und zuverlässiger benutzbar ist.

Die Aufgabe wird durch eine Vorrichtung gelöst, die dadurch gekennzeichnet ist, dass die Vorrichtung einen Behälter mit einer Öffnung aufweist und dass eine Auswurfposition definiert ist, in der der Ausstecher derart - vorzugsweise wieder entfernbar - anordenbar ist, dass der Ausstecher direkt oder indirekt vom Behälter getragen ist und dass mit dem Ausstecher hergestellte Teigwaren unmittelbar von dem in der Auswurfposition angeordneten Ausstecher in den Behälter überführbar sind.

Die Erfindung hat den ganz besonderen Vorteil, dass die mit dem Ausstecher hergestellten Teigwaren schnell und zuverlässig von dem Ausstecher entfernt und in einen Behälter überführt werden können. Hierdurch ist in vorteilhafter Weise die Weiterverarbeitung der Teigtaschen erheblich erleichtert, weil der Benutzer die einzelnen Teigtaschen nicht einzeln vom Ausstecher abnehmen und einzeln in eine Schüssel verbringen muss.

Vielmehr kann der Benutzer, nachdem er die zweite Teigschicht aufgebracht und durch Andrücken die Teigtaschen ausgeschnitten hat, den gesamten Ausstecher um 180° herumdrehen, sodass die Teigtaschen nach unten und die Unterseite des Ausstechers nach oben weist. Anschließend wird der Ausstecher in die Auswurfposition verbracht. Durch Hindurchstechen durch die Durchbrüche des Ausstechers beispielsweise mit dem Finger oder mit einem Löffelstiel, können dann die einzelnen Teigtaschen schnell und zuverlässig vom Ausstecher gelöst werden. Sie fallen erfindungsgemäß automatisch und zuverlässig in den Behälter hinein. Die vorliegende Erfindung gewährleistet ein schnelles Ablösen der Teigtaschen vom Ausstecher und darüber hinaus verhindert die erfindungsgemäße Vorrichtung zuverlässig, dass beim Ablösen einer Teigtasche oder beim anschließenden Transport der Teigtasche diese versehentlich herunterfällt und so beschmutzt und/oder beschädigt wird.

Bei einer besonders vorteilhaften Ausführungsform der erfindungsgemäßen Vorrichtung ist der Ausstecher in die Öffnung des Behälters einsetzbar oder auf die Öffnung des Behälters aufsetzbar.

Insbesondere kann vorteilhaft vorgesehen sein, dass der Ausstecher deckelartig in die Öffnung einsetzbar oder auf die Öffnung aufsetzbar ist. Besonders vorteilhaft ist es hierbei, wenn der Ausstecher derart dimensioniert ist, dass er die Öffnung - abgesehen von den Durchbrüchen - vollständig abdeckt. Eine solche Ausführung gewährleistet zum einen, dass sämtliche Teigtaschen durch die Öffnung in den Behälter gelangen. Darüber hinaus ist weitgehend sichergestellt, dass die Teigtaschen weitgehend nicht an Führungs- und/oder Behälterwänden anschlagen und hierdurch beschädigt werden.

Bei einer ganz besonders vorteilhaften Ausführung, bei der insbesondere ein Verschieben des in der Auswurfposition befindlichen Ausstechers relativ zu dem Behälter, insbesondere relativ zur Öffnung des Behälters, wirkungsvoll vermieden ist, ist vorgesehen, dass zumindest ein Teil der Öffnungsumrandung und zumindest ein Teil des Randes des in oder auf die Öffnung ein- bzw. aufgesetzten Ausstechers - direkt oder indirekt - formschlüssig ineinandergreifen. Insbesondere kann vorgesehen sein, dass die gesamte Öffnungsumrandung und der gesamte Rand des in oder auf die Öffnung ein- bzw. aufgesetzten Ausstechers - direkt oder indirekt - formschlüssig ineinandergreifen.

Von besonderem Vorteil ist es, wenn der Ausstecher in der Auswurfposition derart festlegbar ist, dass ein Verschieben des Ausstechers relativ zu dem Behälter oder zumindest in oder parallel zur Öffnungsebene des Behälters blockiert ist. Dies kann beispielsweise dadurch realisiert sein, dass zumindest ein Teil der Öffnungsumrandung und zumindest ein Teil des Randes des in oder auf die Öffnung ein- bzw. aufgesetzten Ausstechers - form- oder reibschlüssig miteinander verbindbar sind.

Bei einer ganz besonders vorteilhaften Ausführung der erfindungsgemäßen Vorrichtung ist der Ausstecher - vorzugsweise vollständig - in dem Behälter verstaubar. Insbesondere kann vorgesehen sein, dass der Ausstecher in einer Verstauposition in dem Behälter verstaubar ist, in der die Ausstechfläche im Wesentlichen parallel zum Behälterboden ausgerichtet ist.

Eine solche Ausführung hat den ganz besonderen Vorteil, dass die gesamte Vorrichtung einfach und platzsparend, beispielsweise in einem Küchenschrank oder einer Küchenschublade, verstaut werden kann. Dies insbesondere derart, dass der Benutzer lediglich ein einziges Teil, nämlich den Behälter, in dem sich sämtliche übrigen Bauteile der erfindungsgemäßen Vorrichtung - insbesondere der oder die Ausstecher - befinden können, im Schrank oder in der Schublade unterbringen muss. Auf diese Weise ist wirkungsvoll und äußerst vorteilhaft erreicht, dass der Behälter und der bzw. die Ausstecher nicht einzeln zum Küchenschrank bzw. zur Küchenschublade transportiert werden müssen und dass nicht separate Aufbewahrungsplätze im Küchenschrank oder in der Küchenschublade bereitgehalten werden müssen.

Bei einer besonders vorteilhaften Ausführung ist vorgesehen, dass der bzw. die Ausstecher durch die Öffnung in den Behälter einführbar und in die im Behälter befindliche Verstauposition überführbar sind. Alternativ kann natürlich auch vorgesehen sein, dass außer der Öffnung zum Einbringen der hergestellten Teigtaschen eine weitere Öffnung zum Einbringen des - bzw. der Ausstecher vorgesehen ist.

Die Idee, dass der Ausstecher wahlweise einerseits in die Auswurfposition - beispielsweise in oder auf der Öffnung - und andererseits in die Verstauposition - also in den Behälter selbst - eingebracht werden kann, kann in erfindungsgemäßer Weise auf unterschiedliche Weise realisiert sein.

Bei einer vorteilhaften Ausführung ist vorgesehen, dass die Fläche der Projektion des Ausstechers senkrecht zur Ausstechfläche kleiner ist als die Öffnungsfläche und/oder dass die Projektion des in oder auf die Öffnung ein- bzw. aufgesetzten Ausstechers auf die Öffnungsebene innerhalb der Öffnungsumrandung liegt. Auf diese Weise ist sichergestellt, dass der Ausstecher grundsätzlich durch die Öffnung hindurch in den Behälter eingebracht werden kann.

In erfindungsgemäßer Weise ist bei einer vorteilhaften Ausführung ein Haltemittel zum vorübergehenden Halten des Ausstechers in der Auswurfposition, insbesondere in oder auf der Öffnung, vorgesehen. Dieses Haltemittel kann beispielsweise als Rahmen und/oder als Ring ausgebildet sein. Insbesondere kann das Haltemittel als Rahmen und/oder als Ring ausgebildet sein, der in oder an der Öffnung anordenbar und/oder festlegbar ist.

Bei einer weiteren vorteilhaften Ausführung ist das Haltemittel als Adapter zur Anpassung der Größe und/oder Form des Behälters, insbesondere der Größe und/oder Form der Öffnungsumrandung, an die Größe und/oder Form des Ausstechers ausgebildet.

Insbesondere bei den vorgenannten Ausführungsformen kann in vorteilhafter Weise vorgesehen sein, dass sich der Ausstecher durch die Wahl der Reihenfolge des Anordnens des Haltemittels und des Ausstechers wahlweise in die Auswurfstellung oder die Verstaustellung überführen lässt.

Insbesondere kann vorgesehen sein, dass der Behälter und der Ausstecher derart ausgeformt sind, dass sich der Ausstecher problemlos durch die Öffnung in den Behälter und damit in die Verstaustellung überführen lässt, solange das Haltemittel nicht in seiner Arbeitsposition angeordnet ist. Wird hingegen umgekehrt zunächst das Haltemittel in seiner Arbeitsstellung in oder auf dem Behälter positioniert, so definiert dieses die Auswurfposition für den zeitlich nachfolgend anzuordnenden Ausstecher. Es kann in erfindungsgemäßer Weise vorgesehen sein, dass das Haltemittel den Zugang des Ausstechers zu der Verstauposition gewissermaßen verhindert und hierdurch die Herbeiführung der Auswurfposition beim Anordnen des Ausstechers erzwingt und/oder ermöglicht.

Bei einer besonders vorteilhaften und zuverlässigen Ausführungsform der erfindungsgemäßen Vorrichtung weist der Behälter zumindest eine Auflage, insbesondere als Teil eines Vorsprungs, auf. Darüber hinaus ist der Ausstecher bei dieser Ausführungsform derart geformt, dass er - insbesondere zum Überführen des Ausstechers in die Verstauposition - an der Auflage vorbei in den Behälter - vorzugsweise vollständig - einführbar ist. Darüber hinaus ist das Haltemittel bei dieser Ausführungsform der erfindungsgemäßen Vorrichtung derart geformt, dass es sich zum Bereitstellen der Auswurfposition für den Ausstecher auf der zumindest einen Auflage abstützt. Der Benutzer hat also die Wahl, ob er zunächst den Ausstecher in den Behälter einführt und diesen damit in die Verstauposition bringt, oder ob er zunächst das Haltemittel positioniert, und damit ein Festlegen des Ausstechers in der Auswurfposition ermöglicht.

Bei einer ganz besonders vorteilhaften Ausführungsform der erfindungsgemäßen Vorrichtung weist der Behälter mehrere Auflagen, insbesondere als Teile eines oder mehrerer Vorsprünge, auf. Darüber hinaus ist der Ausstecher dieser Ausführungsform derart geformt, dass er zum Überführen des Ausstechers in die Verstauposition an den Auflagen vorbei, in den Behälter - vorzugsweise vollständig - einführbar ist, wobei - zumindest beim Einführen des Ausstechers - ein Teil des Ausstechers in den Freiräumen zwischen den Auflagen angeordnet ist. Bei dieser Ausführungsform ist das Haltemittel derart ausgebildet, dass es die Freiräume zwischen den Auflagen überbrücken kann. Auf diese Weise ist erreicht, dass die Teile des Ausstechers, die in der Verstauposition und/oder auf dem Weg zur Verstauposition zwischen den Auflagen angeordnet sind, wegen des Haltemittels in

diese Freiräume nicht eintauchen können. Hierdurch wird der Ausstecher von dem Haltemittel in der Auswurfposition gehalten. Zum Überführen des Ausstechers in die Verstauposition wird das Haltemittel entfernt.

Bei einer ganz besonders vorteilhaften Ausführung der erfindungsgemäßen Vorrichtung ist das Haltemittel - vorzugsweise vollständig - in dem Behälter verstaubar. Von besonderem Vorteil ist es, wenn das Haltemittel - vorzugsweise vollständig - durch die Öffnung in den Behälter einführbar ist. Insbesondere kann vorteilhaft vorgesehen sein, dass sowohl der Ausstecher, als auch das Haltemittel im Behälter verstaubar sind.

Bei einer anderen erfindungsgemäßen Vorrichtung sind die Öffnung und der Ausstecher derart dimensioniert, dass der Ausstecher in einer ersten Relativstellung relativ zu dem Behälter an der Öffnungsumrandung abstützend in oder auf der Öffnung positionierbar ist, und dass der Ausstecher in einer von der ersten Relativstellung verschiedenen zweiten Relativstellung in die Öffnung einführbar ist. Insbesondere kann vorgesehen sein, dass sich die erste Relativstellung und die zweite Relativstellung - vorzugsweise ausschließlich - durch eine Drehung - insbesondere durch eine Drehung um 90° - des Ausstechers um eine zur Öffnungsebene senkrechte, gedachte Achse unterscheiden.

Beispielsweise kann vorgesehen sein, dass die Öffnung und der Ausstecher im Wesentlichen rechteckig ausgebildet sind, wobei die Öffnung im Wesentlichen so breit ist, wie der Ausstecher lang ist. Ist der Ausstecher quer zur Öffnung angeordnet, so reicht er von einem Rand bis zum anderen Rand und ist in dieser Stellung nicht in den Behälter einführbar. Wird der Ausstecher jedoch 90° gedreht, sodass die Längsrichtungen der Öffnung und des Ausstechers miteinander fluchten, so kann der Ausstecher in den Behälter hineingelegt werden.

Bei einer vorteilhaften Ausführung der erfindungsgemäßen Vorrichtung weist die Öffnung eine Öffnungslänge und eine Öffnungsbreite auf, wobei die Öffnungsbreite kleiner ist als die Öffnungslänge. Darüber hinaus weist der Ausstecher eine Ausstecherlänge auf, die größer oder gleich der Öffnungsbreite ist und die kleiner als die Öffnungslänge ist.

Der Ausstecher kann in vorteilhafter Weise im Wesentlichen plattenförmig ausgebildet sein.

Alternativ oder zusätzlich kann die Ausstechfläche gewölbt sein. Eine leichte Wölbung der Ausstechfläche erhöht insbesondere die Stabilität des Ausstechers und ist besonders dazu geeignet, den Kräften, die beim Andrücken der Teigschichten entstehen, entgegenzuwirken.

In vorteilhafter Weise können die Ausstechschneiden ein Wabenmuster bilden. Das Wabenmuster kann beispielsweise aus sechseckigen Waben bestehen.

Bei einer vorteilhaften Vorrichtung, bei der ein Verschmutzen oder Einstauben der in einem Küchenschrank oder einer Küchenschublade untergebrachten Vorrichtung sicher vermieden ist, weist einen Deckel mit vorzugsweise geschlossener Deckelfläche zum Verschließen der Öffnung des Behälters auf. In vorteilhafter Weise kann auch ein Deckel - mit vorzugsweise geschlossener Deckelfläche - vorgesehen sein, der an dem Behälter festlegbar ist. Zum Festlegen des Deckels an den Behälter kann beispielsweise ein Rastmittel vorgesehen sein.

Von besonderem Vorteil ist ein Set, das aus einer erfindungsgemäßen Vorrichtung und zumindest einem weiteren Ausstecher besteht. Die Ausstecher können unterschiedlich ausgebildet sein. Beispielsweise kann vorgesehen sein, dass ein erster Ausstecher ein kleines Wabenmuster aufweist, während ein zweiter Ausstecher ein größeres Wabenmuster zur Verfügung stellt. Es ist auch möglich, dass ein Ausstecher gerade Ausstechschneiden aufweist, während ein anderer Ausstecher gewellte oder gezackte Ausstechschneiden aufweist.

Weitere Ziele, Vorteile, Merkmale und Anwendungsmöglichkeiten der vorliegenden Erfindung ergeben sich aus der nachfolgenden Beschreibung eines

Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: die Bauteile einer erfindungsgemäßen Vorrichtung in einer Draufsicht,
- Fig. 2: die Bauteile der erfindungsgemäßen Vorrichtung in einer Seitenansicht,
- Fig. 3: die erfindungsgemäße Vorrichtung in der Draufsicht mit in der Verstauposition befindlichem Ausstecher,
- Fig. 4: die erfindungsgemäße Vorrichtung mit in Auswurfposition befindlichen Ausstecher in der Seitenansicht,
- Fig. 5: die erfindungsgemäße Vorrichtung mit Ausstecher und Haltemittel, jeweils in einer Verstauposition in einer Draufsicht,
- Fig. 6: die erfindungsgemäße Vorrichtung mit Ausstecher und Haltemittel, jeweils in einer Verstauposition in einer Seitenansicht,

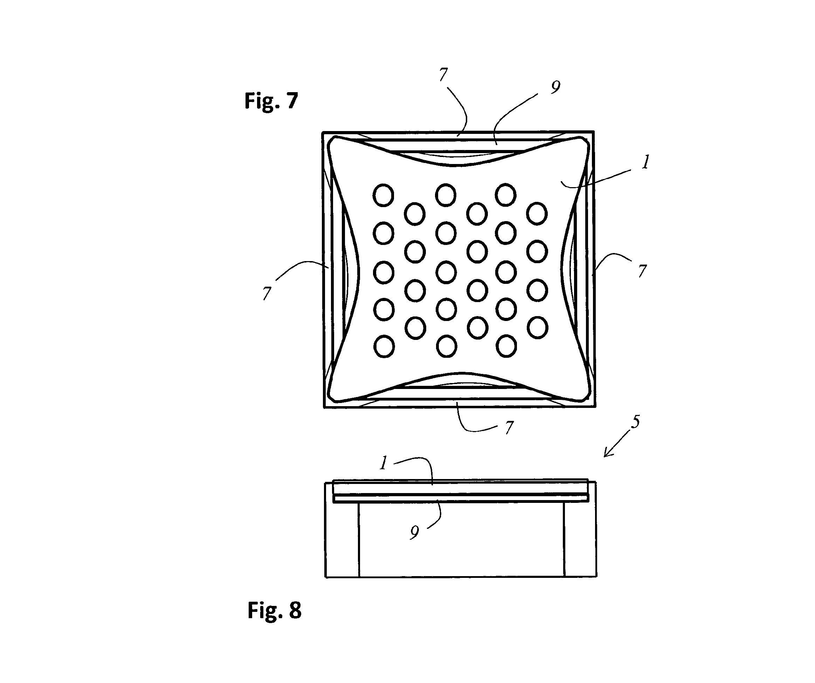

- Fig. 7: erfindungsgemäße Vorrichtung mit dem Ausstecher in der Auswurfposition in einer Draufsicht und
- Fig. 8: die erfindungsgemäße Vorrichtung mit dem Ausstecher in der Auswurfposition in einer Seitenansicht.

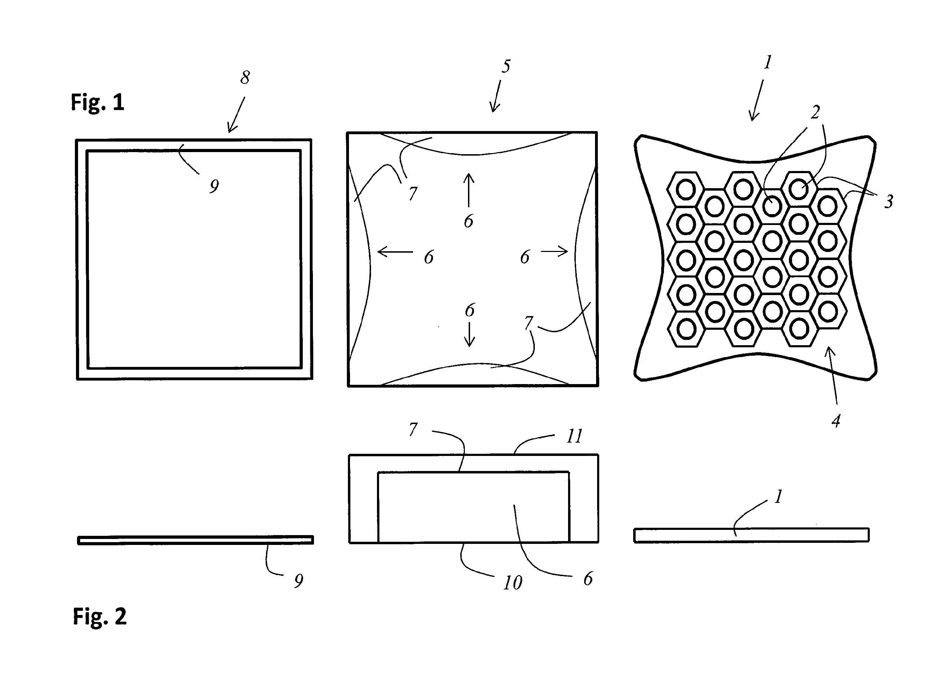

Fig. 1 zeigt die Bauteile der Vorrichtung zum Herstellen von Teigwaren, insbesondere von gefüllten Teigtaschen. Die Vorrichtung weist einen Ausstecher 1 auf, der in einer Ausstechfläche (in Fig. 1 die Zeichenebene) eine Vielzahl von Durchbrüchen 2 aufweist. Jeder der Durchbrüche ist von einer Vielzahl von Ausstechschneiden 3 umgeben. Die Ausstechschneiden 3 bilden ein Wabenmuster 4. Insgesamt ist der Ausstecher in der Draufsicht im Wesentlichen kissenförmig ausgeformt.

Wie Fig. 2 zeigt, ist der Ausstecher, seitlich gesehen, im Wesentlichen flach.

Die Vorrichtung zum Herstellen von Teigwaren weist darüber hinaus einen rechteckigen Behälter 5 auf. Im Inneren des rechteckigen Behälters 5 sind gewölbte Vorsprünge 6 angeordnet, deren Oberseitenauflagen 7 für ein Haltemittel 8, nämlich einen Rahmen 9, bilden. Die Vorsprünge 6 reichen vom Boden 10 des Behälters bis in eine seitliche Höhe, die unterhalb des Behälterrandes 11 liegt. Dies ist in Fig. 2 deutlich zu erkennen.

Auch der Rahmen 9 ist, seitlich gesehen, im Wesentlichen flach.

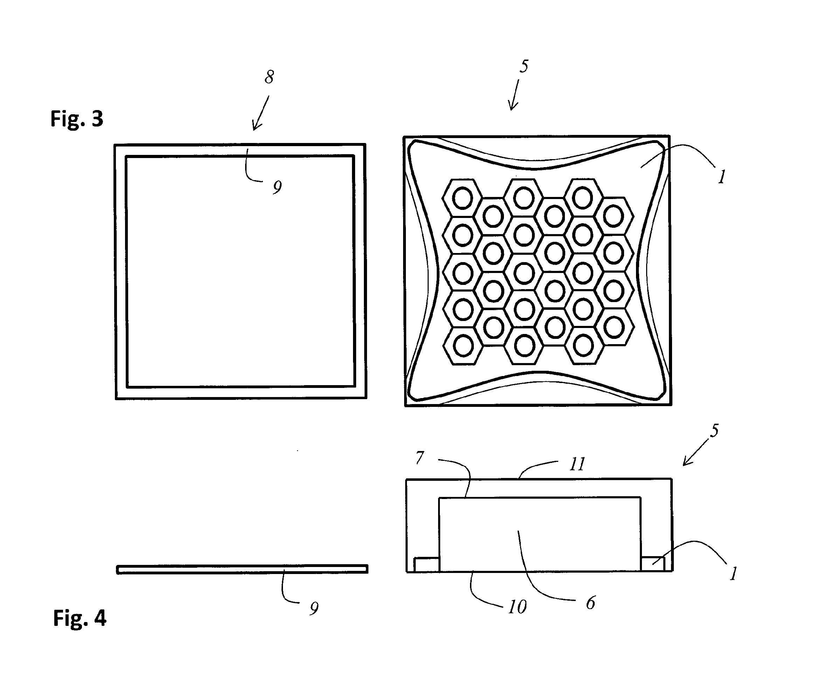

Der Behälter ist mit seinen Vorsprüngen 6 derart ausgebildet, dass der Ausstecher 1 problemlos durch die Öffnung des Behälters eingeführt und auf den Behälterboden 10 gelegt werden kann. Hierbei sind insbesondere die Ecken 12 des Ausstechers 1 zwischen den Vorsprüngen 6 angeordnet. Dies ist in den Fig. 3 und 4 dargestellt.

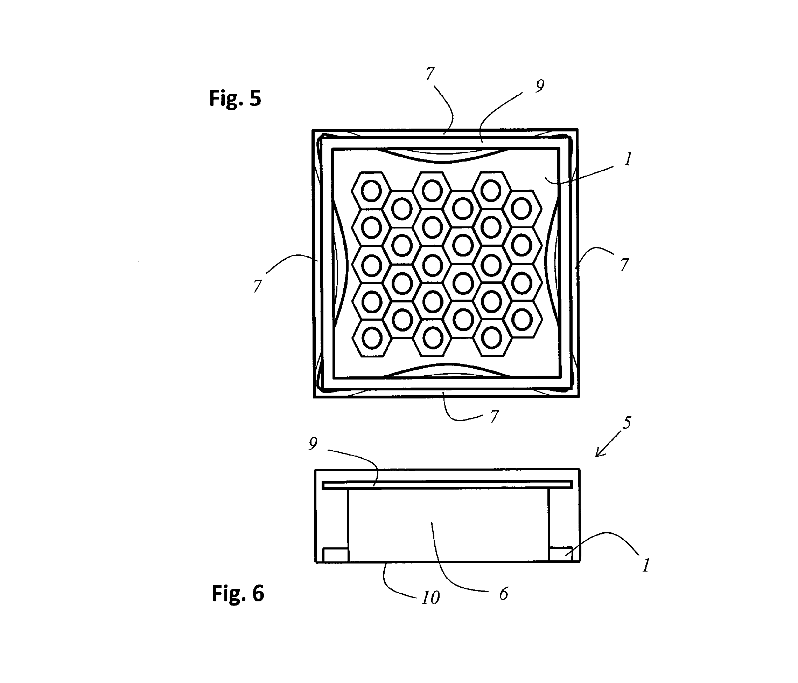

In besonders vorteilhafter Weise ist vorgesehen, dass auch der Rahmen 9 durch die Öffnung des Behälters 5 in den Behälter einführbar ist. Wird der Rahmen 9 nach Einführen des Ausstechers 1 ebenfalls in den Behälter eingeführt, so liegt dieser auf den Auflagen 7 auf. Diese Situation ist in den Fig. 5 und 6 dargestellt. In dieser "Aufräumstellung" kann die gesamte Vorrichtung äußerst einfach in einem Küchenschrank oder einer Küchenschublade untergebracht werden. Hierbei sind der Ausstecher und der Rahmen durch den Behälter gegen äußere Einflüsse, insbesondere gegen Beschädigung oder Verschmutzung, wirkungsvoll geschützt. Zusätzlich könnte ein - hier nicht gezeigter - Deckel mit geschlossener Deckelfläche vorgesehen sein.

Zum Überführen des Ausstechers 1 in die Auswurfstellung, wird zunächst der Rahmen 9 in den Behälter eingebracht und auf die Auflagen 7 aufgelegt. Anschließend wird der Ausstecher 1 mit der Ausstechseite zum Behälter gewandt, auf den Rahmen 9 aufgelegt. Der Ausstecher 1 befindet sich in dieser Stellung in der Auswurfposition, in der mit dem Finger oder mit Hilfe eines Löffelstils die Teigtaschen durch die Durchbrüche 2 hindurch in den Behälter 5 verbracht werden können.

### Bezugszeichenliste

- 1: Ausstecher
- 2: Durchbrüche
- 3: Ausstechschneiden
- 4: Wabenmuster
- 5: Behälter
- 6: Vorsprünge
- 7: Auflagen
- 8: Haltemittel
- 9: Rahmen
- 10: Behälterboden
- 11: Behälterrand
- 12: Ecken des Ausstechers 1

## Patentansprüche

1. Vorrichtung zum Herstellen von Teigwaren, insbesondere von gefüllten Teigtaschen, mit einem Ausstecher (1), der in einer Ausstechfläche eine Vielzahl von Durchbrüchen (2) aufweist, die jeweils von einer oder mehreren Ausstechschneiden (3) umgeben sind, wobei die Vorrichtung einen Behälter (5) mit einer Öffnung aufweist und wobei eine Auswurfposition definiert ist, in der der Ausstecher (1) derart - vorzugsweise wieder entfernbar - anordenbar ist, dass der Ausstecher (1) direkt oder indirekt vom Behälter getragen ist und dass mit dem Ausstecher (1) hergestellte Teigwaren unmittelbar von dem in der Auswurfposition angeordneten Ausstecher (1) in den Behälter (5) überführbar sind, **dadurch gekennzeichnet, dass** ein Haltemittel (8) zum vorübergehenden Halten des Ausstechers (1) in der Auswurfposition, insbesondere in oder auf der Öffnung, vorgesehen ist und der Behälter (5) mehrere Auflagen (7), insbesondere als Teile eines oder mehrerer Vorsprünge (6), aufweist, und dass der Ausstecher (1) derart geformt ist, dass er - insbesondere zum Überführen des Ausstechers (1) in die Verstauposition - an den Auflagen (7) vorbei in den Behälter -an den Auflagen vorbei in den Behälter (5) - vorzugsweise vollständig - einführbar ist, wobei - zumindest beim Einführen des Ausstechers (1) - ein Teil des Ausstechers (1) in Freiräumen zwischen den Auflagen (7) und/oder Vorsprüngen (6) angeordnet ist, und dass das Haltemittel (8) - insbesondere zum Bereitstellen der Auswurfposition für den Ausstecher (1) - dazu ausgebildet ist, die Freiräume zwischen den Auflagen (7) und/oder Vorsprüngen (6) zu überbrücken.

2. Vorrichtung nach Anspruch 1, **dadurch gekennzeichnet, dass** der Ausstecher (1) in die Öffnung einsetzbar oder auf die Öffnung aufsetzbar ist.

3. Vorrichtung nach einem der Ansprüche 1 oder 2, **dadurch gekennzeichnet, dass** der Ausstecher (1) in der Auswurfposition zumindest derart festlegbar ist, dass ein Verschieben des Ausstechers (1) relativ zu dem Behälter (5) oder zumindest in oder parallel zur Öffnungsebene blockiert ist.

4. Vorrichtung nach einem der Ansprüche 1 bis 3, **dadurch gekennzeichnet, dass**
a. der Ausstecher (1) - vorzugsweise vollständig - in dem Behälter (5) verstaubar ist und/oder dass
b. der Ausstecher (1) durch die Öffnung in den Behälter (5) einführbar ist und/oder dass
c. der Ausstecher (1) in einer Verstauposition in dem Behälter (5) verstaubar ist, in der die Ausstechfläche im Wesentlichen parallel zum Behälterboden (10) ausgerichtet ist.

5. Vorrichtung nach einem der Ansprüche 1 bis 4, **dadurch gekennzeichnet, dass** der Ausstecher (1) deckelartig in die - oder auf die Öffnung ein- oder aufsetzbar ist und/oder dass der Ausstecher (1) - abgesehen von den Durchbrüchen - die Öffnung vollständig abdeckend in die - oder auf die Öffnung ein- oder aufsetzbar ist.

6. Vorrichtung nach einem der Ansprüche 1 bis 5, **dadurch gekennzeichnet, dass**
a. zumindest ein Teil der Öffnungsumrandung und zumindest ein Teil des Randes des in oder auf die Öffnung ein- bzw. aufgesetzten Ausstechers (1) - direkt oder indirekt - formschlüssig ineinander greifen und/oder dass
b. die Öffnungsumrandung und der Rand des in oder auf die Öffnung ein- bzw. aufgesetzten Ausstechers (1) - direkt oder indirekt - formschlüssig ineinander greifen.
c. zumindest ein Teil der Öffnungsumrandung und zumindest ein Teil des Randes des in oder auf die Öffnung ein- bzw. aufgesetzten Ausstechers (1) - direkt oder indirekt - derart form- oder reibschlüssig schlüssig zusammen wirken, dass ein Verschieben des Ausstechers (1) - zumindest in oder parallel zur Öffnungsebene - relativ zu dem Behälter (5) blockiert ist.

7. Vorrichtung nach einem der Ansprüche 1 bis 6, **dadurch gekennzeichnet, dass** die Fläche der Projektion des Ausstechers (1) senkrecht zur Ausstechfläche kleiner ist, als die Öffnungsfläche und/oder dass die Projektion des in oder auf die Öffnung ein- bzw. aufgesetzten Ausstechers (1) auf der Öffnungsebene innerhalb der Öffnungsumrandung liegt.

8. Vorrichtung nach Anspruch 1, **dadurch gekennzeichnet, dass** das Haltemittel (8) als Rahmen (9) und/oder als Ring ausgebildet ist und/oder dass das Haltemittel (8) als Rahmen (9) und/oder als Ring ausgebildet ist, der in oder an der Öffnung anordenbar und/oder festlegbar ist.

9. Vorrichtung nach einem der Ansprüche 1 bis 8, **dadurch gekennzeichnet, dass** das Haltemittel (8) als Adapter zur Anpassung der Größe und/oder Form des Behälters (5), insbesondere der Größe und/oder Form der Öffnungsumrandung, an die Größe und/oder Form des Ausstechers (1) ausgebildet ist.

10. Vorrichtung nach einem der Ansprüche 1 bis 9, **dadurch gekennzeichnet, dass** der Behälter (5) zumindest eine Auflage (7), insbesondere als Teil eines Vorsprungs (6), aufweist, und dass der Ausstecher (1) derart geformt ist, dass er - insbesondere zum Überführen des Ausstechers (1) in die Verstauposition - an der Auflage vorbei in den Behälter - vorzugsweise vollständig - einführbar ist und dass das Haltemittel (8) derart geformt ist, dass es sich - insbesondere zum Bereitstellen der Auswurfposition für den Ausstecher (1) - auf der zumindest einen Auflage (7) abstützt.

11. Vorrichtung nach einem der Ansprüche 1 bis 10, **dadurch gekennzeichnet, dass** das Haltemittel (8) - vorzugsweise vollständig - in dem Behälter (5) verstaubar ist und/oder dass das Haltemittel (8) - vorzugsweise vollständig - durch die Öffnung in den Behälter (5) einführbar ist.

12. Vorrichtung nach einem der Ansprüche 1 bis 11, **dadurch gekennzeichnet, dass**
a. die Öffnung und der Ausstecher (1) derart dimensioniert sind, dass der Ausstecher (1) in einer ersten Relativstellung an der Öffnungsumrandung abstützend in oder auf der Öffnung positionierbar ist und dass der Ausstecher (1) in einer von der ersten Relativstellung verschiedenen zweiten Relativstellung in die Öffnung einführbar ist und/oder dass
b. die Öffnung und der Ausstecher (1) derart dimensioniert sind, dass der Ausstecher (1) in einer ersten Relativstellung an der Öffnungsumrandung abstützend in oder auf der Öffnung positionierbar ist und dass der Ausstecher (1) in einer von der ersten Relativstellung verschiedenen zweiten Relativstellung in die Öffnung einführbar ist, wobei sich die erste Relativstellung und die zweite Relativstellung - vorzugsweise ausschließlich - durch eine Drehung - insbesondere durch eine Drehung um 90 Grad - des Ausstechers (1) um eine zur Öffnungsebene senkrechte, gedachte Achse unterscheiden.

13. Vorrichtung nach Anspruch 12, **dadurch gekennzeichnet, dass** die Öffnung eine Öffnungslänge und eine Öffnungsbreite aufweist, wobei die Öffnungsbreite kleiner ist als die Öffnungslänge, und dass der Ausstecher (1) eine Ausstecherlänge aufweist, die größer oder gleich der Öffnungsbreite ist und die kleiner als die Öffnungslänge ist.

14. Vorrichtung nach einem der Ansprüche 1 bis 13, **dadurch gekennzeichnet, dass** ein - vorzugsweise eine geschlossene Deckelfläche aufweisender - Deckel zum Verschließen der Öffnung vorgesehen ist und/oder dass ein Deckel vorgesehen ist, der an dem Behälter (5) festlegbar ist und/oder dass ein Deckel vorgesehen ist, der an dem Behälter (5) mittels zumindest eines Rastmittels festlegbar ist.

15. Set bestehend aus einer Vorrichtung nach einem der Ansprüche 1 bis 14 und zumindest einem weiteren Ausstecher, wobei der Ausstecher (1) und der weitere Ausstecher gemeinsam in dem Behälter (5) verstaubar sind.
